# EUROPEAN PATENT SPECIFICATION

(11) **EP 0 643 704 B1**
(45) Date of publication and mention of the grant of the patent: **17.09.2003**
(21) Application number: 93900550.0
(22) Date of filing: 18.11.1992
(51) Int. Cl.: C07D 257/04, C07F 5/02, C07D 403/10, C07F 5/04, C07F 5/05

(54) **TETRAZOLYLPHENYLBORONIC ACID INTERMEDIATES FOR THE SYNTHESIS OF AII RECEPTOR ANTAGONISTS**
TETRAZOLYLPHENYLBORSÄUREINTERMEDIATE ZUR SYNTHESE VON AII REZEPTOR ANTAGONISTEN
INTERMEDIAIRES DE L'ACIDE TETRAZOLYLPHENYLBORONIQUE DESTINES A LA SYNTHESE D'ANTAGONISTES DU RECEPTEUR DE L'ANGIOTENSINE II

(30) Priority: 18.11.1991 US 793514; 10.07.1992 US 911812; 10.07.1992 US 911813
(43) Date of publication of application: 22.03.1995
(73) Proprietor: E.I. DU PONT DE NEMOURS AND COMPANY, Wilmington Delaware 19898 (US); Merck & Co., Inc., Rahway New Jersey 07065-0900 (US)
(72) Inventor: LO, Young, Sek, Hockessin, DE 19707 (US); ROSSANO, Lucius, Thomas, Newark, DE 19711 (US); LARSEN, Robert, D., Bridgewater, NJ 08807 (US); KING, Anthony, O., Hillsborough, NJ 08876 (US)
(74) Representative: von Kreisler, Alek, Dipl.-Chem.
(86) International application number: US9209979
(87) International publication number: WO93010106

(56) References cited:
- EP-A- 0 291 969
- EP-A- 0 324 377
- EP-A- 0 455 423
- EP-A- 0 561 664
- WO-A-92/17469
- WO-A-92/18092
- FR-A- 2 688 507
- US-A- 5 149 699
- ACCOUNTS OF CHEMICAL RESEARCH, vol.15, no.10, October 1982 pages 306 - 312 BEAK P. & SNIECKUS V. 'Directed lithiation of aromatic tertiary amides: An evolving synthetic methodology for polysubstituted aromatics'
- CHEMICAL REVIEWS, vol.90, no.6, September 1990 pages 879 - 933 SNIECKUS V. 'Directed ortho metalation. Tertiary amide and O-carbamates directors in synthetic strategies for polysubstituted aromatics'
- SYNTHETIC COMMUNICATIONS, vol.11, 1981 pages 513 - 519 MIYAURA N. ET AL. 'The palladium-catalyzed cross-coupling reaction of phenylboronic acid with haloarenes in the presence of bases'
- CHEMICAL ABSTRACTS, 98=891409 (SCHEROWSKY et al.), "Reactions of Heterocyclic Onium Salts with Electronrich Multiple Bond systems", p. 537, 1983.
- SMITH G.B. ET AL: 'Mechanistic studies of the Suzuki cross-coupling reaction' THE JOURNAL OF ORGANIC CHEMISTRY vol. 59, no. 26, 1994, pages 8151 - 8156

## Description

### BACKGROUND OF THE INVENTION

### Field of the Invention

This invention is concerned with methods for preparing 2-n-Butyl-4-chloro-1-[(2'-(2-triphenylmethyl-2H-tetrazol-5-yl)-1,1'biphenyl-4-yl)methyl]-1H-imidazole-5-methanol.

### Background and Prior Art

The successful development of orally active angiotensin converting enzyme (ACE) inhibitors, e.g., captopril, enalapril, etc., for the treatment of hypertension and congestive heart failure has generated great interest in designing new pharmacological blockers of the renin-angiotensin system (RAS). As angiotensin II (AII) is the primary effector molecule of the RAS (Peach, J. J., Renin-Angiotensin System:Biochemistry and Mechanism of Action, Physiol. Rev., 1977, 57:313-370), a receptor antagonist of All would provide a direct approach to block the system. A number of peptide analogs of All have been reported to have All receptor antagonist properties; however, they also retain partial agonist properties and lack oral activities (Corvol, P., New Therapeutic Prospects of Renin-Angiotensin System Inhibition, Clin. Exp. Hypertens.-Theory & Practice, 1989, All (Suppl. 2), 463-470). More recently, following the disclosure of a few nonpeptide All antagonist leads (U.S. 4,355,040), several series of All antagonists have been synthesized at E. I. du Pont de Nemours and Company. Many of these compounds are orally active with potent activities (Wong, P. C., et al., Functional Studies of Nonpeptide Angiotensin II Receptor Subtype-Specific Ligands:DuP753 (AII-1) and DP123177 (AII-2), J. Pharm. and Exp. Ther., 1990, 255 (2), pp 584 to 592 and references therein). These novel compounds were disclosed in European Patent Application 0 324 377 published July 19, 1989.

Many of the All receptor antagonists have the biphenyl structure as a portion of the molecule. Synthetic methods for the preparations of biphenyls were reviewed recently (Bringmann, G., et al., Angew. Chem. Int. Ed. Engl., 29, 1990, 977 to 991). Also Duncia, et al. (U.S. 4,820,843 and J. Org. Chem., 1991, 56, 2395-2400) described alternate preparations of biphenyls. The preparation, properties, and uses of boronic acids and derivatives were summarized in Metal-Organic Compounds, Advances in Chemistry Series, #23, American Chemical Society, 1959. The ortho-lithiation of 2-substituted 5-phenyl-tetrazoles was disclosed in U.S. 5,039,814.

### SUMMARY OF THE INVENTION

The invention relates to a process for preparing
2-n-Butyl-4-chloro-1-[(2'-(2-triphenylmethyl-2H-tetrazol-5-yl)-1,1'biphenyl-4-yl)methyl]-1H-imidazole-5-methanol
which comprises reacting
2-(2'-triphenylmethyl-2'-H-tetrazol-5'-yl)phenylboronic acid
with
1-bromo-4-(2'-butyl-4'-chloro-5'-hydroxymethylimidazole-1'H-1'-yl)methylbenzene
by
A) preparing the catalyst preparation by adding to a mixture of palladium chloride (10.6 mg) and triphenylphosphine (31.5 mg) anhydrous toluene (4 ml); degassing the heterogeneous solution by vacuum/nitrogen purges (3X) and then heating to 60 °C for 30 minutes; adding triisopropylphosphite (30.0 microliters) and further heating the mixture at 60 °C until a homogenious solution was obtained (1 to 2 hours);
   performing the coupling by suspending 2-(2'-triphenylmethyl-2'H-tetrazol-5'-yl)phenylboronic acid (1.3 g) in toluene (4 ml) and adding water (100 microliters); stirring the heterogeneous mixture at room temperature for 30 minutes and charging then potassium carbonate (0.7 g) followed by charging 2-n-butyl-4-chloro-5-hydroxymethyl-1-p-brombenzyl-1H-imidazole; degassing the mixture via vacuum/nitrogen purges (3X) and adding the above catalyst solution; raising the temperature of the mixture to 80 to 85 °C and keeping this temperature for 2 hours; cooling the mixture to 40 °C and adding water (5 ml); removing the aqueous layer and concentrating the organic phase in vacuo at ≤ 30 °C to a volume of ∼3 ml; adding methyl i-butyl ketone (MIBK) (8 ml) and reducing the mixture again to ∼3 ml; diluting the mixture with MIBK (4 ml) and water (36 microliters) heating to 60 °C and the cooling and aging first at 0 °C for 30 minutes followed by aging at -10 °C with stirring for 2 hours; collecting the crystallized product by filtration as a mono-MIBK solvate (1.44 g, 94 % yield); dissolving the crude product in MIBK (2.1 ml) at 80 °C; filtering the solution hot at 80 °C and adding water (33.8 microliters); cooling the solution slowly to 0 °C over 1 hour and aging at 0 °C for 30 minutes followed by aging at -10 °C with stirring for 2 hours; and recovering after filtration 1.38 g of the mono-MIBK solvated product (90% yield);
   or
B) preparing the catalyst solution by
   a) adding to a mixture of palladium chloride (354 mg) and triphenylphosphine (2.1 g) anhydrous tetrahydrofuran (THF) (75 ml), degassing the heterogeneous solution by vacuum/nitrogen purges (3X) and refluxing for 4 hours; cooling the heterogeneous THF solution containing the phosphinated palladium chloride to room temperature and adding diethylzinc (4.0 ml, 1 M in hexanes); stirring the solution for 30 minutes; or
   b) by adding to a mixture of palladium chloride (354 mg) and triphenylphosphine (2.1 g) anhydrous THF (75 ml); degassing the heterogeneous solution by vacuum/nitrogen purges (3X) and adding then triisopropylphosphite (0.99 ml); and maintaining the mixture at room temperature until all the palladium chloride was dissolved and a homogeneous solution was obtained (0.5 to 1 hour);
   preparing a benzyltrimethylammonium carbonate preparation by adding to a benzyltrimethylammonium hydroxide solution (42 g) ammonium carbonate (5.0 g) and aging the reaction with stirring until all of the ammonium carbonate was dissolved (∼30 minutes); removing the methanol solvent in vacuo and further displacing with THF (2 x 10 ml); and dissolving the residual carbonate in THF (90 ml);
   performing the coupling step by charging to the above carbonate solution 2-(2'-triphenylmethyl-2'H-tetrazol-5'-yl)phenylboronic acid) (24.0 g) and 2-n-butyl-4-chloro-5-hydroxymethyl-1-p-bromobenzyl-1H-imidazole (14.2 g); degassing the mixture by vacuum/nitrogen purges (5X), followed by adding the above prepared catalyst solution; heating the reaction mixture to reflux, aging until completion (8 to 10 hours), cooling to room temperature and filtering through a pad of celite and washing it further with THF (3 X 10 ml) (yield 89 wt %);
   or
C) preparing the catalyst by dissolving triphenylphosphine (262 mg, 1.0 mmol) in THF (20 ml) and degassing the solution by vacuum/nitrogen purges (3X); adding palladium acetate (56 mg, 0.25 mmol) and degassing the solution again (3X); warming the resulting solution to 60 °C for 30 min. and then cooling to 25 °C;
   performing the coupling step by suspending 2-(2'-triphenylmethyl-2'H-tetrazol-5'-yl)phenylboronic acid (15.4 g, 26.7 mmol, 75 wt % pure) in diethoxymethane (DEM) (80 ml, KF ≤ 500 mg/ml); adding water (0.55 ml, 31 mmol) and aging the slurry at ambient temperature for 30 min; adding after the age another charge of water (0.55 ml, 31 mmol) to the boronic acid suspension under agitation; treating the slurry then with powdered potassium carbonate (8.6 g, 62 mmol) and alkylated 1-bromo-4-(2'-n-butyl-4'-chloro-5'-hydroxymethylimidazole-1'H-1'-yl) methylbenzene (8.97 g, 25 mmol); aging the mixture at 20-25 °C for 30 min, then degassing (3X); charging the catalyst solution and heating the mixture to reflux (76-79 °C) for completion the reaction in 2-6 hours; adding water (30 ml) and THF (25 ml) when the imidazole has been consumed and stirring the mixture at 55-60 °C; separating the water layer and washing the organic layer with water (30 ml); concentrating the organic layer in vacuo to a volume of 50 ml to remove most of the THF; adding more DEM (50 ml) and removing by distillation to further reduce THF to ≤ 5 vol %; diluting the residual organic solution with warm (60 °C) DEM (to a final volume of 75 ml) and water (0.5 ml, 28 mmol); then cooling the mixture slowly to -12 °C over 2 hours; aging at -12 °C for 1 hour and collecting thereafter the product by filtration; washing the cake with cold DEM (25 ml); vacuum drying at 40 % to obtain 15.5 g product (93%) (non-solvated) [PD = 600 to 1000 ppm.];
   or
D) preparing the catalyst by dissolving triphenylphosphine (262 mg, 1.0 mmol) in THF (20 ml) and degassing the solution by vacuum/nitrogen purges (3X); adding palladium acetate (56 mg, 0.25 mmol) and degassing the solution again (3X); warming the resulting solution to 60 °C for 30 min. and then cooling to 25 °C;
   performing the coupling step by suspending 2-(2'-triphenylmethyl-2'H-tetrazol-5'-yl)phenylboronic acid (15.4 g, 26.7 mmol, 75 wt % pure) in diethoxymethane (DEM) (80 ml, KF ≤ 500 mg/ml); adding water (0.55 ml, 31 mmol) and aging the slurry at ambient temperature for 30 min; adding another charge of water (0.55 ml, 31 mmol) to the boronic acid suspension under agitation; treating the slurry with powdered potassium carbonate (8.6 g, 62 mmol) and 1-bromo-4-(2'-n-butyl-4'-chloro-5'-hydroxymethylimidazole-1'H-1'-yl) methylbenzene, the alkylated imidazole (8.97 g, 25 mmol); aging the mixture at 20-25 °C for 30 min and then degassing well (3X); charging the catalyst solution and heating the mixture to reflux (76-79 °C) till completion of the reaction in 2-6 hours; adding water (30 ml) and THF (25 ml) when the imidazole has been consumed and stirring the mixture at 55-60 °C; separating the water layer and washing the organic layer with water (30 ml); adding tributylphosphine (0.62 ml, 10 mol %) and concentrating the organic layer in vacuo to a volume of 50 ml to remove most of the THF; adding more DEM (50 ml) and removing by distillation to further reduce THF to ≤ 5 vol%; diluting the residual organic solution with warm (60 °C) DEM (to a final volume of 75 ml) and water (0.5 ml, 28 mmol); cooling the mixture slowly to -12 °C over 2 hours; after aging at -12 °C for 1 hour collecting the product by filtration; washing the cake with cold DEM (25 ml); vacuum drying at 40 °C to obtain 15.5 g of the product (93%) (non-solvated) [PD ≤ 10 ppm].

### DETAILED DESCRIPTION OF INVENTION

The present invention relates to a process for preparing 2-n-Butyl-4-chloro-1-[(2'-(2-triphenylmethyl-2H-tetrazol-5-yl)-1,1'biphenyl-4-yl)methyl] 1H-imidazole-5-methanol using a coupling reaction. The 2-(2'-triphenylmethyl-2'-H-tetrazol-5'-yl)phenylboronic acid starting material is prepared in accordance with step 1. Step 1 comprises reacting the carbanion having the formula 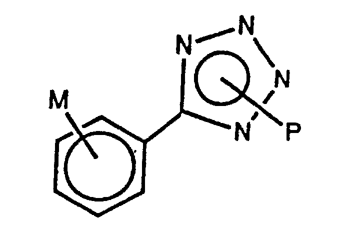 and the boron compound having the formula

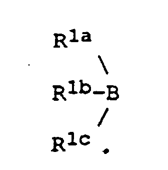

The meanings given above for P, the protecting group for the tetrazole substituent in formula I are those considered the most preferred for purposes of the invention. P is preferably defined as triphenylmethyl. Therefore, one skilled in the art may refer to the text "Protective Groups in Organic Synthesis" (in particular, Chapters 5 and 7), Theodora W. Green, John Wiley & Sons, 1981, for the selection of other possible protecting groups that could be utilized for purposes of the present invention.

The reaction is conducted in an aprotic solvent, for example, tetrahydrofuran, diethyl ether, benzene, etc., at a temperature ranging from -70°C to 25°C, preferably -30°C to 0°C. Due to the moisture-sensitive nature of the reactants, the reaction is conducted in an inert atmosphere such as nitrogen.

The novel tetrazolylphenylboronic acid (R^{1a} and R^{1b}=OH) can be isolated from the reaction mixture by the addition of isopropanol-water or water and maintaining the pH in the range of 3 to 10, with mineral acids such as phosphoric acid, carboxylic acids such as acetic acid, ammonium salts such as ammonium chloride, or carbonic acid salts such as sodium carbonate. The novel tetrazolylphenylboronic acid derivatives (R^{1a} and R^{1b}=C₁-C₄ alkoxy, Cl, Br) can be used in step 2 without isolation.

The novel tetrazolylphenylboronic acid (R^{1a} and R^{1b}=OH) can be prepared from 5-phenyltetrazole, which is readily available commercially, in a one-pot procedure as illustrated in Part B of Example 1 (reference).

In step 2, a novel compound prepared in step 1 is reacted with an electrophile having the formula 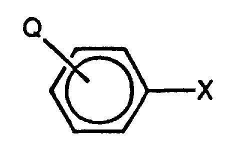 wherein Q represents 4-(2'-butyl-4'-chloro-5'hydroxymethylimidazole-1'H-1'-yl)methyl; and X represents bromine and iodine in a solvent in the presence of a metal catalyst and a base for one to thirty hours at a temperature ranging from room temperature to 150°C, preferably 60°C to 90°C. The coupling solvents for the reaction can be selected from a variety of known process solvents. Illustrative of the coupling solvents that can be utilized either singly or in combinations are toluene, tetrahydrofuran, water, or diethoxymethane. Preferably in combination with water.

The metal catalyst is a complex of, palladium, preferably a phosphinated palladium II complex selected from the group consisting of: bis (triphenylphosphine)palladium chloride, bis(triphenylphosphine)palladium bromide, bis(triphenylphosphine)palladium acetate.

The active catalyst may be prepared in advance or generated in the reaction mixture.

The active catalyst can also be prepared from a Pd(II) salt such as palladium chloride, palladium bromide or palladium acetate with triarylphosphine, typically triphenylphosphine under the action of reducing agents such as diakylzinc, presence of a catalyst forming solvent. The preferable reducing agent is diethylzinc.

The catalyst forming solvents for the reaction can be selected from a variety of known process solvents. Illustrative of the catalyst forming solvents that can be utilized either singly or in combinations are toluene, tetrahydrofuran. Preferably the catalyst forming solvent is tetrahydrofuran or toluene.

There are a variety of bases that can be used for effecting the reaction. Illustrative examples are inorganic bases such as potassium carbonate, sodium carbonate, cesium carbonate. When an inorganic base insoluble in the organic solvent is used, dissolution in water may be necessary; the use of a phase-transfer catalyst such as tetra-n-butylammonium bromide or crown ether also facilitate the reaction. Organic solvent soluble bases such as tetra-n-butylammonium carbonate or tetra-n-butylammonium hydroxide, benzyltrimethylammonium carbonate, benzyltrimethylammonium methyl carbonate, benzyltrimethylammonium methoxide or benzyltrimethylammonium hydroxide, or other basic tetraalkylammonium compounds are particularly useful in certain cases. The organic solvent soluble base maybe prepared in advance or generated in the reaction mixture. For example, the preparation of benzyltrimethylammonium carbonate in which benzyltrimethylammonium hydroxide solution is reacted with ammonium carbonate.

The purification of the product of Step 2, formula II, maybe aided by the addition of trialkylphosphine in the crystallization of the compound of formula II or by the addition of trialkylphosphine during the recrystallization process. The purification is preferably aided by the presence of tributylphosphine.

The invention is more fully exemplified and taught by the following examples.

### EXAMPLE 1 (Reference)

### 2-(2'-Triphenylmethyl-2'H-tetrazol-5'-yl)phenylboronic acid

### Part A

To a 22 L flask under nitrogen purge was charged 8.25 L acetone, followed by 1.1 kg 5-phenyltetrazole. Triethylamine (800 g) was added in such a rate that the temperature was maintained below 35°C with some cooling. Solid trityl chloride was charged to this light suspension in five 440 g portions. The temperature was maintained below 35°C. An additional 1.38 L acetone was added to the reaction which was then maintained at 25° to 30°C with stirring for 2 hours. Water (2.2 L) was added and the mixture was chilled to 15° to 20°C. The solid was collected by filtration; the filter cake was rinsed with 1.65 L 50% acetone-water followed by excess amount of water. The wet cake was re-slurried in 8 L acetone and 8 L of water was added slowly. The suspension was stirred for 1 hour then filtered. The filter cake was rinsed with 3 to 5 L of water. The white solid was dried in a vacuum oven at 40-45°C to a constant weight of 3.0 kg, mp 158-160°C.

To a dry 12 L flask under nitrogen purge was charged 3.19 L of dry tetrahydrofuran (THF). With agitation, 398 g of 5-phenyl-2-trityl-tetrazole prepared above was charged. The system was evacuated and released to nitrogen three times and then cooled to -20°C. A solution of butyl lithium in heptane (1.6 M, 477 g) was then added to the reaction mixture while maintaining the temperature at -15°C to -20°C. The resultant deep red solution was stirred at -5°C for 1 hour during which time the lithium salt crystallized out. The solid suspension was cooled to -25°C again and 333 g triisopropylborate was charged at a temperature range of -20° to -25°C. After the addition, the mixture was allowed to warm to 20°C without heating. About 2.5 L of solvent was removed by vacuum distillation. The pot temperature was kept below 40°C. To the mixture was then added 2.66 L of 3% acetic acid in water and the resultant suspension was stirred for 1 hour. The white solid was collected by filtration. The solid cake was rinsed with 1.5 L of 20% tetrahydrofuran in water, followed by 3 L of water. The solid was dried under vacuum at room temperature to a constant weight of 502.3 g, mp 142-146°C (dec.).

### Part B

A preferred alternative procedure for preparing the title compound of this Example 1 is by means of the following procedure.

5-Phenyltetrazole (14.6 g, 100 mmol) was suspended in dry THF (120 ml) under nitrogen and triethylamine (14.8 ml, 105 mmol) was added while maintaining the temperature at 15 to 20°C. Triphenylchloromethane (29.3 g, 105 mmol) in dry THF (60 ml) was then added slowly to the mixture at ≤ 25°C. After the addition was complete the mixture was warmed to 35°C for 1 hour and then cooled at 0°C for 1 hour. The precipitated triethylammonium chloride was filtered and the filtrate was degassed via vacuum/nitrogen purges (3X). The degassed solution was cooled to -20°C and butyllithium (1.6 M in hexanes) was added until a pink color persisted for 2 minutes. The pink color indicated that the solution was completely dry. More butyllithium (65.6 ml, 105 mmol) was charged at ≤ -15°C. The deep red heterogeneous mixture was aged at -20 to -15°C for 1 hour and triisopropylborate (30.6 ml, 130 mmol) was added while maintaining the temperature at ≤ -15°C.

The deep red solution was aged at -15°C for 30 minutes and then warmed to 10°C over 1 hour. The mixture volume was reduced by ∼200 ml in vacuo at ≤ 15°C at which time < 5% of hexanes (vs THF) remained. The residue was diluted with THF to a total volume of 160 ml and isopropanol (60 ml) was added. The solution was cooled to 0°C and saturated aqueous ammonium chloride (40 ml, 200 mmol) was charged within 15 minutes. The mixture was aged at 20 to 25°C for 30 minutes and water (100 ml) was added over 30 to 45 minutes. After aging the mixture for 1 hour, the crystallized product was collected by filtration and washed with cold 80% aqueous isopropanol. The filter cake was air dried on the filter to give 69.7 g (86% yield, corrected for 82% purity) of product as the THF mono-solvate.

### EXAMPLE 2 (Reference)

### 3-(2'-Triphenylmethyl-2'H-tetrazol-5'-yl)phenylboronic acid

m-Bromobenzonitrile (0.102 m) was dissolved in 130 mL of toluene and the solution was heated to boiling and 30 mL of solvent was distilled under nitrogen purge. After cooling down to room temperature, tri-n-butyl tin chloride (0.102 m) and sodium azide (0.1 m) were charged to the reaction and the mixture was heated at reflux for 18 hours. To the cooled down mixture was added 60 mL toluene and a solution of sodium hydroxide (0.12 m) in 12 mL water. After stirring at room temperature for 5 minutes, triphenylmethyl chloride (0.08 m) was added as a solid and the mixture was stirred for 1 hour. Another charge of triphenylmethyl chloride (0.02 m) was then made and the agitation continued for another hour. The reaction was worked up by addition of 50 mL water, basified with a small amount of sodium hydroxide. The layers were separated and the organic layer was extracted once with 50 mL water, followed by 50 mL saturated sodium chloride solution. The organic layer was dried over anhydrous sodium sulfate, filtered through Celite and the filtrate was concentrated on a rotary evaporator. The residual oil was triturated with 200 mL of n-heptane and chilled in an ice bath. The solid was collected by filtration and rinsed with cold n-heptane. The filter cake was dried in a vacuum oven at 40° to 50°C until constant weight.

The 2-triphenylmethyl-5-(m-bromophenyl)-2H-tetrazole obtained as described above is treated with n-butyllithium in tetrahydrofuran to generate the lithium salt of the carbanion, 2-triphenylmethyl-5-(m-lithiophenyl)-2H-tetrazole, which in turn is reacted with triisopropylborate to produce the title compound according to the procedure of Part A of Example 1.

### EXAMPLE 3 (Reference)

### 4-(2'-Triphenylmethyl-2H-tetrazol-5'-yl)phenylboronic acid

Starting with p-bromobenzonitrile and using the procedure of Example 2 (Reference), the title compound is prepared.

### EXAMPLE 4 (Reference)

### 5-(4'-Methyl-1,1'-biphenyl-2-yl)-2-triphenylmethyl-2H-tetrazole

2-(2'-Triphenylmethyl-2'H-tetrazol-5'-yl)phenylboronic acid (Example 1, 0.02 m = 9 g), p-bromotoluene (0.022 m = 3.84 g), sodium carbonate (0.04 m = 4.24 g), toluene (70 mL), and water (20 mL) were charged to a reaction flask. The system was evacuated and released to nitrogen three times and then maintained under a nitrogen atmosphere. Tetrakistriphenylphosphine palladium (0.6 mm = 0.693 g) was charged to the reaction mixture which was then heated at 80°C for 10 hours. The reaction was cooled to room temperature. The organic layer was separated and extracted with 50 mL of water. The organic layer was dried over anhydrous sodium sulfate and concentrated. The residue was crystallized from toluene-n-heptane to give 6.76 g (71% yield) of title compound, mp 164-166°C (dec.).

### EXAMPLE 5 (Reference)

### 5-(4'-Bromomethyl-1/1'-biphenyl-2-yl)-2-triphenylmethyl-2H-tetrazole

A mixture of 5-(4'-methyl-1,1'-biphenyl-2-yl)-2-triphenyl-2H-tetrazole (0.195 m 93.5 g), N-bromosuccinimide (0.215 m = 38.2 g), VAZO®52 (2.37 g), and 563 g of methylene chloride was stirred and refluxed for 7 hours. The reaction mixture was cooled to room temperature and washed once with 375 mL of water, followed by a solution of 18.8 g of sodium bicarbonate in 357 mL of water. The methylene chloride solution was concentrated and the residue was triturated with 591 g of heptanes. The slurry was chilled to 0°C before filtration. The solution was rinsed with 1:6 methylene chloride/heptanes and then dried in a vacuum oven at 50°C to give 102.7 g of title compound.

### EXAMPLE 6 (Reference)

### 2-n-Butyl-4-chloro-1-[(2'-(2-triphenylmethyl-2H-tetrazol-5-yl)-1,1'-biphenyl-4-yl)methyl]-1H-imidazole-5-carboxaldehyde

A mixture of 5-(4'-bromomethyl-1,1'-biphenyl-2-yl)-2-triphenylmethyl-2H-tetrazole (0.102 m = 63.1 g), 2-n-butyl-4-chloro-1H-imidazole-5-carboxaldehyde (0.113 m = 21.1 g) and anhydrous potassium carbonate (0.135 m = 18.6 g) in 251 g of N,N-dimethylacetamide was stirred at 0-5°C for 8 hours and the temperature of the reaction was raised to 25°C for an additional 4 hours. Normally the product of this step was not isolated but reduced with sodium borohydride to give 2-n-butyl-4-chloro-1-[(2'-(2-triphenylmethyl-2H-tetrazol-5-yl)-1,1'-biphenyl-4-yl)methyl]-1H-imidazole-5-methanol. The title compound can be isolated by extraction into toluene from aqueous N,N-dimethylacetamide, concentration of the toluene solution, and crystallization from ethyl acetate or ethanol, mp 145-147°C (dec.).

### EXAMPLE 7 (Reference)

### 2-n-Butyl-4-chloro-1-[(2'-(2-triphenylmethyl-2H-tetrazol-5-yl)-1,1'-biphenyl-4-yl)methyl]-1H-imidazole-5-methanol

To the reaction mixture of Example 6 (Reference) was added sodium borohydride (0.1 m = 3.9 g) along with some water (8.7 mL). After stirring at room temperature for 3 hours, the reaction mixture was slowly added to excess amount of water (540 ml) with stirring. The wet filter cake was washed with 270 mL of water, then crystallized from 355 g of butyl chloride to give a crude product. Recrystallization from 300 g of ethyl acetate and dried in a vacuum oven to give 49.3 g of pure title compound in 72% yield for two steps, mp 168-169°C.

### EXAMPLE 8 (Reference)

### 2-n-Butyl-4-chloro-1-[(2'-(tetrazol-5-yl)-1,1'-biphenyl-4-yl)methyl]-1H-imidazole-5-methanol, potassium salt

A mixture of 2-n-butyl-4-chloro-1-[(2'-(2-triphenylmethyl-2H-tetrazol-5-yl)-1,1'-biphenyl-4-yl)methyl]-1H-imidazole-5-methanol (5.3 kg) in 25 L tetrahydrofuran (THF) was treated with 8.38 kg of 12% aqueous hydrochloric acid added at 23°C over an hour. The mixture was stirred at 25°C for 12 hours. A 30% sodium hydroxide solution was added at 22°C over a 2-hour period until the pH was 12.5. The THF was distilled off by heating but the volume was replenished by addition of water. Distillation was terminated when the head temperature reached 94°C. The mixture was cooled to room temperature and the precipitated triphenylmethanol was removed by filtration and rinsed with water. The filtrate and rinse was extracted twice with 4 L portions of toluene. Ethyl acetate (9.8 L) was then added to the aqueous solution and 36% aqueous hydrochloric acid was added at 21-24°C until the pH was 3.8. The mixture was cooled to 10°C and held for 1 hour. The solid was collected by filtration and washed with 50% aqueous methanol, followed by 10 L ethyl acetate, then dried at 50°C in a vacuum oven to give 2.8 kg white solid, mp 182-183°C (dec.). A 1.92 kg portion of this solid in 5.8 kg of isopropanol was treated with a mixture of 0.363 kg of potassium hydroxide in 185 mL water and 3.62 L isopropanol at 39-40°C over a 4-hour period until the pH was 10. The solution was clarified by filtration. Approximately 67% of the water present was removed by distillation (monitored by Karl Fischer titration of the distillate). Heptanes (4.5 L) was added and the mixture was cooled to room temperature. The product was collected by filtration and rinsed with heptanes. It was dried at 50°C in a vacuum oven to yield 1.82 kg of white solid, mp 267-269°C (dec.).

### EXAMPLE 9 (Reference)

### 5-(4'-Hydroxymethyl-1,1'-biphenyl-2-yl)-2-triphenylmethyl-2H-tetrazole

A mixture of 2-(2'-triphenylmethyl-2'H-tetrazol-5'-yl)phenylboronic acid (0.03 m = 13.5 g), p-bromobenzyl alcohol (0.034 m = 6.2 g) tetrabutylammonium carbonate (67% pure, 34 g), and 120 mL toluene in a reaction flask was evacuated and released to nitrogen three times and maintained under a nitrogen atmosphere. To the mixture was charged tetrakistriphenylphosphine palladium (0.9 mm = 1.04 g). The reaction was heated at 75° to 81°C for 5 hours. The reaction mixture was cooled to room temperature and extracted three times with 80 mL portions of water. The organic layer was clarified by filtering through a Celite cake and then concentrated to a brown oil. Crystallization from about 30 mL of acetone yielded a solid which was collected and rinsed with 50% aqueous acetone. The solid was dried under a stream of nitrogen to a constant weight of 9.08 g (61.5% yield), mp 168-170°C.

### EXAMPLE 10 (Reference)

### 5-(4'-Methanesulfonyloxymethyl-1,1'-biphenyl-2-yl)-2-triphenylmethyl-2H-tetrazole

To a mixture of 5-(4'-hydroxymethyl-1,1'-biphenyl-2-yl)-2-triphenylmethyl-2H-tetrazole (0.01 m = 4.90 g) and potassium carbonate (0.05 m = 6.90 g) stirred in 50 mL N,N-dimethylacetamide chilled at 1°C was added a total of 3.34 g (0.024 m) of methanesulfonyl chloride in portions over 6 hours. The progress of the reaction was monitored by thin layer chromatography or HPLC. The title compound was formed in better than 90% in the mixture which was used in the next example.

### EXAMPLE 11 (Reference)

### 2-n-Butyl-4-chloro-1-[(2'-(2-triphenylmethyl-2H-tetrazol-5-yl)-1,1'-biphenyl-4-yl)methyl]-1H-imidazole-5-methanol

To the reaction mixture of Example 10 (Reference) was added 2-n-butyl-4-chloro-1H-imidazole-5-carboxaldehyde (0.01 m = 1.86 g). The reaction was stirred overnight at room temperature. Water (0.87 mL) was added dropwise followed by sodium borohydride pellets (0.37 g). After stirring for 5 hours, the reaction mixture was added slowly to 100 mL water containing 3 mL acetone. The temperature was maintained at about 25°C during the addition. The resultant slurry was stirred for an additional 45 minutes, then filtered. The solid was rinsed with two 50 mL portions of water. The wet cake was recrystallized first from 50 mL of n-butyl chloride, then from 30 mL of ethyl acetate to give 1.95 g title compound in 28% overall yield; mp 168-169°C.

### EXAMPLE 12 (Reference)

### 5-(4'-Formyl-1,1'-biphenyl-2-yl)-2-triphenylmethyl-2H-tetrazole

2-(2'-Triphenylmethyl-2'H-tetrazol-5'-yl)phenyl boronic acid (5 mm = 2.16 g), p-bromobenzaldehyde (6 mm = 1.12 g), potassium carbonate (10 mm = 1.38 g), tetrabutylammonium bromide (0.46 mm = 0.15 g), toluene (20 mL), and water (1.2 mL) were charged to the reaction flask. The system was evacuated and released to nitrogen three times and then maintained under a nitrogen atmosphere. Tetrakistriphenylphosphine palladium (0.15 mm = 0.18 g) was charged to the reaction mixture which was then heated at 70 to 80°C for 5.5 hours. The cool reaction mixture was filtered to remove some solid; rinsed with toluene and water. The filtrate and rinsings were combined. The organic layer was separated and washed with 10 mL water, then dried over magnesium sulfate, filtered, and concentrated. The residue was triturated with a mixture of 8 mL toluene and 5 mL n-heptane. The solid was collected by filtration, rinsed with 1:1 toluene/n-heptane, and dried under vacuum is 1.18 g (48% yield), mp 147-149°C.

### EXAMPLE 13 (Reference)

### 5-(4'-Hydroxymethyl-1,1'-biphenyl-2-yl)-2-triphenylmethyl-2H-tetrazole

5-(4'-formyl-1,1'-biphenyl-2-yl)-2-triphenylmethyl-2H-tetrazole was dissolved in N,N-dimethylacetamide and some water and reduced by sodium borohydride. The reaction mixture was then poured into water slowly to precipitate the title compound which is further purified by recrystallizations as described in Example 11 (Reference

### EXAMPLE 14 (Reference)

### 2-n-Butyl-4-chloro-1-p-bromobenzyl-1H-imidazole-5-carboxaldehyde

A mixture of 2-n-butyl-4-chloro-1H-imidazole-5-carboxaldehyde (0.6 m = 111.9 g), p-bromobenzylbromide (0.6 m = 153.02 g), anhydrous potassium carbonate (0.75 m = 103.5 g), and dry N,N-dimethylacetamide (900 mL) was stirred at room temperature for 4 hours. The mixture was diluted with 1.2 L of toluene and 1.8 L of water. After mixing for half an hour, the layers were separated. The organic layer was washed two more times with 900 mL portions of water, then dried over magnesium sulfate. The drying agent was removed by filtration and the filtrate was concentrated. The residual oil was pumped overnight to a weight of 191.71 g (89.9% yield).

### EXAMPLE 15 (Reference)

### 2-n-Butyl-4-chloro-1-[(2'-(2-triphenylmethyl-2H-tetrazol-5-yl)-1,1'-biphenyl-4-yl)methyl]-1H-imidazole-5-methanol

A mixture of the oil obtained in Example 14 (Reference) (0.05 m = 17.8 g), 2-(2'-triphenylmethyl-2'H-tetrazol-5'-yl)phenylboronic acid (0.065 m = 29.3 g), potassium carbonate (0.1 m = 13.8 g), water (11 mL), tetra-n-butylammonium bromide (0.005 m = 1.61 g), triphenylphosphine (0.006 m = 1.58 g) in 200 mL toluene was evacuated and released to nitrogen three times and maintained under a nitrogen atmosphere. Tris(dibenzylidene-acetone)dipalladium (1.5 mm = 0.64 g) was charged and the reaction was heated at 75° to 81°C for 12 hours. The cooled reaction mixture was filtered to remove some grey solid. The toluene layer was stirred with sodium borohydride (0.1 m = 3.8 g), tetra-n-butyl ammonium bromide (0.005 m = 1.6 g), and 30 mL water for six hours. The mixture was filtered through a Celite cake to remove the black tarry precipitate. The organic layer was washed once with 100 mL water then stirred with a solution of thiourea (7 g) in 100 mL water for 1 hour. Some brown sludge (palladium complex) was formed and precipitated out. The mixture was filtered and the organic layer was separated then treated with a fresh solution of thiourea (7 g) in 100 mL water for 1 hour. The organic layer was separated, washed once with 100 mL water and once with 100 mL saturated sodium chloride solution. The organic layer was stirred with 30 g magnesium sulfate and 15 g charcoal for 1 hour. The solid was removed by filtering through a Celite cake. The filtrate was concentrated to an oil and crystallized from 35 mL of isobutyl acetate in an ice bath. The solid was collected and dried under a stream of nitrogen to a constant weight of 17.17 g.

### EXAMPLE 16 (Reference)

### 2-n-Propyl-4-ethyl-1-[(2'-(2-triphenylmethyl-2H-tetrazol-5-yl)-1,1'-biphenyl-4-yl)methyl]-1H-imidazole-5-carboxaldehyde

Starting with 2-n-propyl-4-ethyl-1H-imidazole-5-carboxaldehyde and using the procedure of Example 14 and then the procedure of Example 15 (Reference), the title compound is prepared.

### EXAMPLE 17 (Reference)

### 2-n-Propyl-4-pentafluoroethyl-1-[(2'-(2-triphenylmethyl-2H-tetrazol-5-yl)-1,1'-biphenyl-4-yl)methyl]-1H-imidazole-5-carbomethoxylate

Starting with 2-n-propyl-4-pentafluoroethyl-1H-imidazole-5-carbomethoxylate and using the procedure of Example 14 and then the procedure of Example 15, the title compound is prepared.

### EXAMPLE 18 (Reference)

### 2-n-butyl-4-chloro-5-hydroxymethyl-1-p-bromobenzyl-1H-imidazole

A suspension of 2-n-butyl-4-chloro-1H-imidazole-5-carboxyaldehyde (146.9 g, 0.78 mol) and p-bromobenzyl bromide (195 g, 0.78 mol) in dimethylacetamide (1.0 L) was cooled to 0°C and potassium carbonate (138 g, 1.0 mol) was added. The mixture was aged for three hours at 0°C and then at 20 to 25°C for two to four hours. The mixture was diluted with dimethylacetamide (0.15 L) and then filtered. The filter cake was washed with dimethylacetamide (50 ml). The combined filtrates were diluted with methanol (0.66 L) and cooled to 0°C. Sodium borohydride (37.8 g, 1.0 mol) was added as a solid and the mixture was aged with stirring at 20 to 25°C for two hours. Water (1.56 L) was added slowly to crystallize the product. The filter cake was washed carefully with water (1.56 L) and dried in vacuo at 60°C. The yield was 255 g (91%, corrected for 99.5% purity).

### EXAMPLE 19

### 2-n-Butyl-4-chloro-1-(2'-(2-triphenylmethyl-2H-tetrazol-5-yl)-1,1'-biphenyl-4-yl)methyl]-1H-imidazole-5-methanol

All operations described for this example were performed under an atmosphere of nitrogen.

### Catalyst preparation

To a mixture of palladium chloride (10.6 mg) and triphenylphosphine (31.5 mg) was added anhydrous toluene (4 ml). The heterogeneous solution was degassed by vacuum/nitrogen purges (3X) and then heated to 60°C for 30 minutes. Triisopropylphosphite (30.0 microliters) was added and the mixture was further heated at 60°C until a homogeneous solution was obtained (1 to 2 hours).

### Coupling

2-(2'-triphenylmethyl-2'H-tetrazol-5'-yl)phenylboronic acid (1.3 g) was suspended in toluene (4 ml) and water (100 microliters) was added. The heterogeneous mixture was stirred at room temperature for 30 minutes and potassium carbonate (0.7 g) was then charged followed by the titled product of Example 18 (0.7 g). The mixture was degassed via vacuum/nitrogen purges (3X) and the above catalyst solution was added. The temperature of the mixture was raised to 80 to 85°C and kept at this temperature for 2 hours. After the mixture was cooled to 40°C, water (5 ml) was added. The aqueous layer was removed and the organic phase was concentrated in vacuo at ≤ 30°C to a volume of -3 ml. Methyl i-butyl ketone (MIBK) (8 ml) was added and the mixture was again reduced to ∼3 ml. The mixture was diluted with MIBK (4 ml) and water (36 microliters), heated to 60°C and then cooled and aged first at 0°C for 30 minutes followed by aging at -10°C with stirring for 2 hours. The crystallized product was collected by filtration as a mono-MIBK solvate (1.44 g, 94% yield). The crude product was dissolved in MIBK (2.1 ml) at 80°C, the solution was filtered hot at 80°C and water (33.8 microliters) was added. The solution was cooled slowly to 0°C over 1 hour and aged at 0°C for 30 minutes followed by aging at -10°C with stirring for 2 hours. After filtration 1.38 g of the mono-MIBK solvated product was recovered (90% yield).

### EXAMPLE 20

### 2-n-Butyl-4-chloro-1-[(2'-(2-triphenylmethyl-2H-tetrazol-5-yl)-1,1'-biphenyl-4-yl)methyl]-1H-imidazole-5-methanol

All operations described for this example were performed under an atmosphere of nitrogen.

### Catalyst Preparation

The following two procedures can be used with similar results.

### Procedure A

To a mixture of palladium chloride (354 mg) and triphenylphosphine (2.1 g) was added anhydrous tetrahydrofuran (THF) (75 ml). The heterogeneous solution was degassed by vacuum/nitrogen purges (3X) and then refluxed for 4 hours.

Most of the palladium chloride changed over to bis(triphenylphosphine)palladium chloride during the reflux. Some insoluble black solids were still observed at this point.

The heterogeneous THF solution containing the phosphinated palladium chloride was cooled to room temperature and diethylzinc (4.0 ml, 1 M in hexanes) was added. Except for a small amount of black solids, the solution essentially became homogeneous after stirring for 30 minutes. This activated catalyst solution was used in the coupling step described below.

### Procedure B

To a mixture of palladium chloride (354 mg) and triphenylphosphine (2.1 g) was added anhydrous THF (75 ml). The heterogeneous solution was degassed by vacuum/nitrogen purges (3X) and then triisopropylphosphite (0.99 ml) was added. The mixture was maintained at room temperature until all the palladium chloride was dissolved and a homogeneous solution was obtained (0.5 to 1 hour).

### Benzyltrimethylammonium Carbonate Preparation

To a benzyltrimethylammonium hydroxide solution (42 g) was added ammonium carbonate (5.0 g) and the reaction was aged with stirring until all of the ammonium carbonate dissolved (∼30 minutes). The methanol solvent was removed in vacuo and further displaced with THF (3 X 10 ml). The residual carbonate was dissolved in THF (90 ml).

### Coupling Step

To the above carbonate solution was charged the titled product of Example 1 (24.0 g) and the titled product of Example 18 (14.2 g). The mixture was degassed by vacuum/nitrogen purges (5X), followed by the addition of the catalyst solution prepared above. The reaction mixture was heated to reflux, aged until completion (8 to 10 hours), cooled to room temperature and filtered through a pad of Celite. The Celite was further washed with THF (3 X 10 ml). The yield was 89 wt %.

### EXAMPLE 21 (Reference)

### 2-n-Butyl-4-chloro-1-[(2'-(tetrazol-5-yl)-1,1'-biphenyl-4-yl)methyl]-1H-imidazole-5-methanol, potassium salt

2-n-butyl-4-chloro-1-[2'-(2-triphenylmethyl-2H-tetrazol-5-yl)-1,1'-biphenyl-4-yl)methyl] -1H-imidazole-5-methanol (5.0 g, 6.54 mmol) was dissolved in THF (60 ml). 4 N Sulfuric acid (38 ml, 152 mmol) was added with stirring at 25 to 30°C. The solution was aged overnight at 20 to 25°C and isopropyl acetate (60 ml) was then added. The layers were separated and the organic phase was back-extracted with 4 N sulfuric acid (19 ml). The aqueous layers were combined and the organic solvents (THF and isopropyl acetate) were removed in vacuo. The remaining aqueous solution was diluted with THF (10% of THF by volume) and passed through a pad of Ecosorb S 402 (5.0 g). The pad was rinsed with 10% THF in 4 N sulfuric acid. The filtrate was then passed through a column of SP-207 (60 ml) and the column was washed with water (180 ml) followed with 1 M K₂HPO₄ (180 ml). The pH of the eluent was monitored to ensure complete potassium salt formation. Further washing with water (180 ml) removed the sulfate and excess phosphate. The potassium salt product was eluted with 20% aqueous THF. Concentration of the aqueous solution and dilution with isopropanol gave crystalline product. Alternatively, the product was isolated by spray drying. The yield was 2.56 g (85%).

### EXAMPLE 22 (Reference)

### 1-Bromo-4-(2'-n-butyl-4'-chloro-5'-hydroxymethylimidazole-1'H-1'-yl)methylbenzene

### I. Alkylation

To 200 mL of dimethyl acetamide under a nitrogen atmosphere in a 1-liter 3-necked flask fitted with a mechanical stirrer and thermocouple is charged 30.8 g (0.163 mol) of 2-n-butyl-4-chloro-5-formyl-1H-imidazole 1 and 43.7 g (0.16 mol) of 4-bromobenzyl bromide 2. The solution is cooled to -5°C followed by portionwise addition of 27.1 g (0.19 mol) of powdered potassium carbonate over 10 min with rapid stirring while keeping the reaction temperature between -5-0°C. The slurry is stirred at -5°C for 2 h and room temperature for 2 h or until the alkylation is complete.

### II. Filtration

The slurry is filtered and the cake is washed with an anhydrous mixture of dimethyl acetamide (30 mL) and methanol (130 mL). The filtrate is used directly in the next step.

### III. Reduction

Under a nitrogen atmosphere, 1.85 g (48 mmol) of powdered sodium borohydride is added portionwise over 0.5 h to the filtrate at -15°C in a 5-liter 3-necked flask with a mechanical stirrer and a thermocouple, keeping the reaction temperature between -15 to -5°C. The mixture is warmed to room temperature and aged for 1 h or until the reduction is complete.

### IV. Crystallization

Acetic acid (2.74 mL) is added dropwise over 10 min with rapid stirring while keeping the temperature of the mixture at 20-25°C. This mixture is aged at room temperature for 0.5 h, followed by the addition of water (160 mL) dropwise over 1 h. The solution is seeded with imidazole 4 and followed by the addition of water (160 mL) dropwise over 1.h. The product precipitated within 0.5 h. The slurry is aged at room temperature for 2 h, cooled to 10°C, aged for 0.5 h and the solid is filtered. The cake is washed with 320 mL of water, suction dried under nitrogen at room temperature for 2 h and oven dried under house vacuum (-24 psi) at <60°C for 12 h to afford 54.3 g of imidazole 4 as a white solid (HPLC assay: 98.8 A%, 97.2 W%, overall yield: 92.4%, 0.5 W% of the regioisomer).

### EXAMPLE 23

### 2-n-Butyl-4-chloro-1-[(2'-(2-triphenylmethyl-2H-tetrazol-5-yl)-1,1'-biphenyl-4-yl)methyl]-1H-imidazole-5-methanol

### I. Catalyst Preparation

Triphenylphosphine (262 mg, 1.0 mmol) is dissolved in THF (20 mL) and the solution is degassed by vacuum/nitrogen purges (3X). Palladium acetate (56 mg, 0.25 mmol) is added and the solution is degassed again (3X). The resulting solution is warmed to 60°C for 30 min. and then cooled to 25°C.

### II. Coupling

### Note: All solvents must be degassed.

2-(2'-triphenylmethyl-2'H-tetrazol-5'-yl)phenylboronic acid (15.4 g, 26.7 mmol, 75 wt % pure) is suspended in diethoxymethane (DEM) (80 mL, KF ≤ 500 mg/ml). Water (0.55 mL, 31 mmol) is added and the slurry is aged at ambient temperature for 30 min. After the age, another charge of water (0.55 ml, 31 mmol) is added to the boronic acid suspension under agitation. The slurry is then treated with powdered potassium carbonate (8.6 g, 62 mmol) and alkylated imidazole, the titled product of Example 22 (Reference) (8.97 g, 25 mmol). The mixture is aged at 20-25°C for 30 min then degassed well (3X). (Note: in the pilot plant, degassing takes much longer and can be started immediately after the imidazole and carbonate are added). The catalyst solution is then charged and the mixture is heated to reflux (76-79°C). The reaction is complete in 2-6 hours. When the imidazole has been consumed, water (30 mL) and THF (25 ml) are added and the mixture is stirred at 55-60°C. The water layer is separated and the organic layer is washed with water (30 mL). The organic layer is concentrated in vacuo to a volume of 50 ml to remove most of the THF. More DEM (50 ml) is added and removed by distillation to further reduce THF to ≤ 5 vol %. The residual organic solution is diluted with warm (60°C) DEM (to a final volume of 75 ml) and water (0.5 ml, 28 mmol). The mixture is then cooled slowly to -12°C over 2 hours. After aging at -12°C for 1 hour, the product is collected by filtration. The cake is washed with cold DEM (25 mL). Vacuum drying at 40°C gave 15.5 g (93% of the titled product (non-solvated). [Pd = 600 to 1000 ppm.].

### EXAMPLE 24

### 2-n-Butyl-4-chloro-1-[(2'-(2-triphenylmethyl-2H-tetrazol-5-yl)-1,1'-biphenyl-4-yl)methyl]-1H-imidazole-5-methanol

### I. Catalyst preparation

Triphenylphosphine (262 mg, 1.0 mmol) is dissolved in THF (20 mL) and the solution is degassed by vacuum/nitrogen purges (3X). Palladium acetate (56 mg, 0.25 mmol) is added and the solution is degassed again (3X). The resulting solution is warmed to 60°C for 30 min. and then cooled to 25°C.

### II. Coupling

### Note: All solvents must be degassed.

2-(2'-Triphenylmethyl-2'H-tetrazol-5'-yl)phenylboronic acid (15.4 g, 26.7 mmol, 75 wt % pure) is suspended in diethoxymethane (DEM) (80 mL, KF ≤ 500 mg/ml). Water (0.55 mL, 31 mmol) is added and the slurry is aged at ambient temperature for 30 min. After the age, another charge of water (0.55 ml, 31 mmol) is added to the boronic acid suspension under agitation. The slurry is then treated with powdered potassium carbonate (8,6 g, 62 mmol) and the titled product of Example 22 (Reference), the alkylated imidazole (8.97 g, 25 mmol). The mixture is aged at 20-25°C for 30 min then degassed well (3X). (Note: in the pilot plant, degassing takes much longer and can be started immediately after the imidazole and carbonate are added). The catalyst solution is then charged and the mixture is heated to reflux (76-79°C). The reaction is complete in 2-6 hours. When the imidazole has been consumed, water (30 mL) and THF (25 ml) are added and the mixture is stirred at 55-60°C. The water layer is separated and the organic layer is washed with water (30 mL). Tributylphosphine (0.62 ml, 10 mol %) is added and the organic layer is concentrated in vacuo to a volume of 50 ml to remove most of the THF. More DEM (50 ml) is added and removed by distillation to further reduce THF to ≤ 5 vol %. The residual organic solution is diluted with warm (60°C) DEM (to a final volume of 75 ml) and water (0.5 ml, 28 mmol). The mixture is then cooled slowly to -12°C over 2 hours. After aging at -12°C for 1 hour, the product is collected by filtration. The cake is washed with cold DEM (25 mL). Vacuum drying at 40°C gave 15.5 g (93%) of the titled product (non-solvated). [Pd ≤ 10 ppm].

### EXAMPLE 25 (Reference)

### 2-n-Butyl-4-chloro-1-[(2'-(2-triphenylmethyl-2H-tetrazol-5-yl)-1,1'-biphenyl-4-yl)methyl]-1H-imidazole-5-methanol as the methyl isobutyl ketone solvate

A suspension of the titled product of Example 24 (5 g) in methyl isobutyl ketone (MIBK) (40 ml) is degassed (3X) and tributylphosphine (0.12 g, 8 mol %) is added. The mixture is heated to 85°C at which time a homogeneous solution was obtained. Degassed water (0.135 g, 100 mol %) is then added and the solution is cooled to -10°C over 2 hours. The heterogeneous solution is aged at -10°C for 2 hours, the crystallized product is collected by filtration and washed with cold MIBK (-10°C, 15 ml). The recovery was 5.40 g of the titled product (93.9 %, as the MIBK solvate).

### EXAMPLE 26

### 2-n-butyl-4-chloro-1-[(2'-(tetrazol-5-yl)-1,1'-biphenyl-4-yl)-methyll-1H-imidazole-5-methanol, potassium salt

### I. Deprotection

Dissolve 2.50 g of the titled product of Example 25 (Reference), the methyl isobutyl ketone solvate, by adding 10 mL of 0.75 M H₂SO₄ in 50:50 MeCN:water. Age 2 hours 25 min, 23-25°C. Add 15 mL of water in 2 min (can be added in 30 min to an hour in larger scales), and age 1.75 hours, 23-25°C. Filter and wash with 5 mL of 20:80 MeCN:water. There was almost no starting material left in the trityl alcohol filter cake (<0.05 area%).

### II. Free Acid Formation

Dilute the above filtrate with 13 mL of MeCN. The pH of the solution is 1.50. The temperature of the solution following neutralization and crystallization was 22-24°C. After adding 1.5 mL of 3 N NaOH (pH 1.75-1.65), the reaction is seeded with 20 mg of the free acid. Age 15 min. Slowly add the next 1 mL of 3 M NaOH to allow for good crystal growth (on this scale, the addition time was 5-10 min). Age 30 min. Add the remaining 3 M NaOH (pH 3.60-3.50). Age 1 hour. The white slurry is filtered and washed with 5 mL of 20:80 MeCN:water then 10 mL of water. A thorough water wash of the free acid filter cake is necessary to remove all the salts. The wash can be checked for SO₄⁻². The filter cake is dried in a vacuum oven at 35°C for 18 hours with nitrogen purge. The yield of the free acid was 1.28 g (92.5%) and there was 54 mg (4%) of the free acid in the mother liquors.

### III. Salt Formation

To 4.0 g (9.46 mmoles) of the free acid is added 10.9 ml of 0.842 N KOH solution all in one portion. The slurry is aged at room temperature for 30 minutes, during which time most of the solid dissolves. The cloudy solution is filtered and the solids collected on a sintered glass funnel. The pH of the filtrate is measured at 9.05. The aqueous solution is added slowly to a refluxing azeotropic mixture of cyclohexane/isopropanol (69°C) whereupon the ternary azeotrope cyclohexane/isopropanol/water (64°C) begins to distill. When the solution is dry the temperature of the overhead rises to 69° and the potassium salt crystallizes. When the water content of the pot is <0.05% the distillation is halted and the white slurry is cooled to room temperature. The white crystalline solid is collected on a sintered glass funnel and washed with 10-15 ml of cyclohexane/isopropanol 67/33 and dried in a vacuum oven (wt 3.8 g yield 95%).

## Claims

1. A process for preparing 2-n-Butyl-4-chloro-1-[(2'-(2-triphenylmethyl-2H-tetrazol-5-yl)-1,1'biphenyl-4-yl)methyl]-1H-imidazole-5-methanol which comprises reacting
2-(2'-triphenylmethyl-2'-H-tetrazol-5'-yl)phenylboronic acid with 1-bromo-4-(2'-butyl-4'-chloro-5'-hydroxymethylimidazole-1'H-1'-yl)methylbenzene
by
A) preparing the catalyst preparation by adding to a mixture of palladium chloride (10.6 mg) and triphenylphosphine (31.5 mg) anhydrous toluene (4 ml); degassing the heterogeneous solution by vacuum/nitrogen purges (3X) and then heating to 60 °C for 30 minutes; adding triisopropylphosphite (30.0 microliters) and further heating the mixture at 60 °C until a homogenious solution was obtained (1 to 2 hours);
performing the coupling by suspending 2-(2'-triphenylmethyl-2'H-tetrazol-5'-yl)phenylboronic acid (1.3 g) in toluene (4 ml) and adding water (100 microliters); stirring the heterogeneous mixture at room temperature for 30 minutes and charging then potassium carbonate (0.7 g) followed by charging 2-n-butyl-4-chloro-5-hydroxymethyl-1-p-brombenzyl-1H-imidazole; degassing the mixture via vacuum/nitrogen purges (3X) and adding the above catalyst solution; raising the temperature of the mixture to 80 to 85 °C and keeping this temperature for 2 hours; cooling the mixture to 40 °C and adding water (5 ml); removing the aqueous layer and concentrating the organic phase in vacuo at ≤ 30 °C to a volume of ∼3 ml; adding methyl i-butyl ketone (MIBK) (8 ml) and reducing the mixture again to ∼3 ml; diluting the mixture with MIBK (4 ml) and water (36 microliters) heating to 60 °C and the cooling and aging first at 0 °C for 30 minutes followed by aging at -10 °C with stirring for 2 hours; collecting the crystallized product by filtration as a mono-MIBK solvate (1.44 g, 94 % yield); dissolving the crude product in MIBK (2.1 ml) at 80 °C; filtering the solution hot at 80 °C and adding water (33.8 microliters); cooling the solution slowly to 0 °C over 1 hour and aging at 0 °C for 30 minutes followed by aging at -10 °C with stirring for 2 hours; and recovering after filtration 1.38 g of the mono-MIBK solvated product (90% yield);
or
B) preparing the catalyst solution by
a) adding to a mixture of palladium chloride (354 mg) and triphenylphosphine (2.1 g) anhydrous tetrahydrofuran (THF) (75 ml), degassing the heterogeneous solution by vacuum/nitrogen purges (3X) and refluxing for 4 hours; cooling the heterogeneous THF solution containing the phosphinated palladium chloride to room temperature and adding diethylzinc (4.0 ml, 1 M in hexanes); stirring the solution for 30 minutes; or
b) by adding to a mixture of palladium chloride (354 mg) and triphenylphosphine (2.1 g) anhydrous THF (75 ml); degassing the heterogeneous solution by vacuum/nitrogen purges (3X) and adding then triisopropylphosphite (0.99 ml); and maintaining the mixture at room temperature until all the palladium chloride was dissolved and a homogeneous solution was obtained (0.5 to 1 hour);
preparing a benzyltrimethylammonium carbonate preparation by adding to a benzyltrimethylammonium hydroxide solution (42 g) ammonium carbonate (5.0 g) and aging the reaction with stirring until all of the ammonium carbonate was dissolved (∼30 minutes); removing the methanol solvent in vacuo and further displacing with THF (2 x 10 ml); and dissolving the residual carbonate in THF (90 ml);
performing the coupling step by charging to the above carbonate solution 2-(2'-triphenylmethyl-2'H-tetrazol-5'-yl)phenylboronic acid) (24.0 g) and 2-n-butyl-4-chloro-5-hydroxymethyl-1-p-bromobenzyl-1H-imidazole (14.2 g); degassing the mixture by vacuum/nitrogen purges (5X), followed by adding the above prepared catalyst solution; heating the reaction mixture to reflux, aging until completion (8 to 10 hours), cooling to room temperature and filtering through a pad of celite and washing it further with THF (3 X 10 ml) (yield 89 wt %);
or
C) preparing the catalyst by dissolving triphenylphosphine (262 mg, 1.0 mmol) in THF (20 ml) and degassing the solution by vacuum/nitrogen purges (3X); adding palladium acetate (56 mg, 0.25 mmol) and degassing the solution again (3X); warming the resulting solution to 60 °C for 30 min. and then cooling to 25 °C;
performing the coupling step by suspending 2-(2'-triphenylmethyl-2'H-tetrazol-5'-yl)phenylboronic acid (15.4 g, 26.7 mmol, 75 wt % pure) in diethoxymethane (DEM) (80 ml, KF ≤ 500 mg/ml); adding water (0.55 ml, 31 mmol) and aging the slurry at ambient temperature for 30 min; adding after the age another charge of water (0.55 ml, 31 mmol) to the boronic acid suspension under agitation; treating the slurry then with powdered potassium carbonate (8.6 g, 62 mmol) and alkylated 1-bromo-4-(2'-n-butyl-4'-chloro-5'-hydroxymethylimidazole-1'H-1'-yl) methylbenzene (8.97 g, 25 mmol); aging the mixture at 20-25 °C for 30 min, then degassing (3X); charging the catalyst solution and heating the mixture to reflux (76-79 °C) for completion the reaction in 2-6 hours; adding water (30 ml) and THF (25 ml) when the imidazole has been consumed and stirring the mixture at 55-60 °C; separating the water layer and washing the organic layer with water (30 ml); concentrating the organic layer in vacuo to a volume of 50 ml to remove most of the THF; adding more DEM (50 ml) and removing by distillation to further reduce THF to ≤ 5 vol %; diluting the residual organic solution with warm (60 °C) DEM (to a final volume of 75 ml) and water (0.5 ml, 28 mmol); then cooling the mixture slowly to -12 °C over 2 hours; aging at -12 °C for 1 hour and collecting thereafter the product by filtration; washing the cake with cold DEM (25 ml); vacuum drying at 40 % to obtain 15.5 g product (93%) (non-solvated) [PD = 600 to 1000 ppm.];
or
D) preparing the catalyst by dissolving triphenylphosphine (262 mg, 1.0 mmol) in THF (20 ml) and degassing the solution by vacuum/nitrogen purges (3X); adding palladium acetate (56 mg, 0.25 mmol) and degassing the solution again (3X); warming the resulting solution to 60 °C for 30 min. and then cooling to 25 °C;
performing the coupling step by suspending 2-(2'-triphenylmethyl-2'H-tetrazol-5'-yl)phenylboronic acid (15.4 g, 26.7 mmol, 75 wt % pure) in diethoxymethane (DEM) (80 ml, KF ≤ 500 mg/ml); adding water (0.55 ml, 31 mmol) and aging the slurry at ambient temperature for 30 min; adding another charge of water (0.55 ml, 31 mmol) to the boronic acid suspension under agitation; treating the slurry with powdered potassium carbonate (8.6 g, 62 mmol) and 1-bromo-4-(2'-n-butyl-4'-chloro-5'-hydroxymethylimidazole-1'H-1'-yl) methylbenzene , the alkylated imidazole (8.97 g, 25 mmol); aging the mixture at 20-25 °C for 30 min and then degassing well (3X); charging the catalyst solution and heating the mixture to reflux (76-79 °C) till completion of the reaction in 2-6 hours; adding water (30 ml) and THF (25 ml) when the imidazole has been consumed and stirring the mixture at 55-60 °C; separating the water layer and washing the organic layer with water (30 ml); adding tributylphosphine (0.62 ml, 10 mol %) and concentrating the organic layer in vacuo to a volume of 50 ml to remove most of the THF; adding more DEM (50 ml) and removing by distillation to further reduce THF to ≤ 5 vol%; diluting the residual organic solution with warm (60 °C) DEM (to a final volume of 75 ml) and water (0.5 ml, 28 mmol); cooling the mixture slowly to -12 °C over 2 hours; after aging at -12 °C for 1 hour collecting the product by filtration; washing the cake with cold DEM (25 ml); vacuum drying at 40 °C to obtain 15.5 g of the product (93%) (non-solvated) [PD ≤ 10 ppm].

## Patentansprüche

1. Verfahren zum Herstellen von 2-n-Butyl-4-chlor-1-[(2'-(2-triphenylmethyl-2Htetrazol-5-yl)-1,1'-biphenyl-4-yl)methyl]-1H-imidazol-5-methanol umfassend das Umsetzen von
2-(2'-Triphenylmethyl-2'-H-tetrazol-5'-yl)phenylboronsäure mit 1-Brom-4-(2'-butyl-4'-chlor-5'-hydroxymethylimidazol-1'H-1'-yl)methylbenzol
durch
A) Herstellen der Katalysatorzubereitung durch Zufügen wasserfreien Toluols (4 ml) einem Gemisch aus Palladiumchlorid (10,6 mg) und Triphenylphosphin (31,5 mg); Entgasen der heterogenen Lösung durch Vakuum/Stickstoffspülungen (3x) und anschließend 30 Minuten Erhitzen auf 60°C; Zufügen von Triisopropylphosphit (30,0 Mikroliter) und weiter Erhitzen des Gemisches auf 60°C bis eine homogene Lösung erhalten worden ist (1 bis 2 Stunden); Ausführen der Kupplung durch Suspendieren von 2-(2'-Triphenylmethyl-2'H-tetrazol-5'-yl)phenylboronsäure (1,3 g) in Toluol (4 ml) und Zufügen von Wasser (100 Mikroliter); 30 Minuten Rühren des heterogenen Gemisches bei Raumtemperatur und anschließend Eintragen von Kaliumcarbonat (0,7 g), gefolgt vom Eintragen von 2-n-Butyl-4-chlor-5-hydroxymethyl-1-p-brombenzyl-1H-imidazol; Entgasen des Gemisches durch Vakuum/Stickstoffspülungen (3x) und Zufügen der vorstehenden Katalysatorlösung; Erhöhen der Temperatur des Gemisches auf 80 bis 85°C und 2 Stunden Halten dieser Temperatur; Abkühlen des Gemisches auf 40°C und Zufügen von Wasser (5 ml); Entfernen der wäßrigen Schicht und Einengen der organischen Phase im Vakuum bei ≤ 30°C auf ein Volumen von ∼3 ml; Zufügen von Methylisobutylketon (MIBK) (8 ml) und erneutes Einengen des Gemisches auf ∼3 ml; Verdünnen des Gemisches mit MIBK (4 ml) und Wasser (36 Mikroliter), Erhitzen auf 60°C und anschließend Abkühlen und Altern zuerst 30 Minuten bei 0°C, gefolgt von 2 Stunden Altern bei -10°C unter Rühren; Sammeln des kristallisierten Produkts durch Filtration als Mono-MIBK-Solvat (1,44 g, 94% Ausbeute); Lösen des Rohprodukts in MIBK (2,1 ml) bei 80°C; Heißfiltrieren der Lösung bei 80°C und Zufügen von Wasser (33,8 Mikroliter); langsam Abkühlen der Lösung über 1 Stunde auf 0°C und 30 Minuten Altern bei 0°C, gefolgt von 2 Stunden Altern bei -10°C unter Rühren und Isolieren nach Filtration von 1,38 g (90% Ausbeute) Produkt als Mono-MIBK-Solvat;
oder
B) Herstellen der Katalysatorlösung durch
a) Zufügen wasserfreien Tetrahydrofurans (THF) (75 ml) einem Gemisch aus Palladiumchlorid (354 mg) und Triphenylphosphin (2,1 g), Entgasen der heterogenen Lösung durch Vakuum/Stickstoffspülungen (3x) und 4 Stunden Erhitzen unter Rückfluß; Abkühlen der das phosphinierte Palladiumchlorid enthaltenden heterogenen THF-Lösung auf Raumtemperatur und Zufügen von Diethylzink (4,0 ml, 1 M in Hexanen); 30 Minuten Rühren der Lösung oder
b) Zufügen von wasserfreiem THF (75 ml) einem Gemisch aus Palladiumchlorid (354 mg) und Triphenylphosphin (2,1 g); Entgasen der heterogenen Lösung durch Vakuum/Stickstoffspülungen (3x) und anschließend Zufügen von Triisopropylphosphit (0,99 ml) und Halten des Gemisches bei Raumtemperatur bis alles Palladiumchlorid gelöst ist und eine homogene Lösung erhalten worden ist (0,5 bis 1 Stunde);
Herstellen einer Benzyltrimethylammoniumcarbonatzubereitung durch Zufügen von Ammoniumcarbonat (5,0 g) einer Benzyltrimethylammoniumhydroxidlösung (42 g) und Altern der Reaktion unter Rühren bis alles Ammoniumcarbonat gelöst ist (∼30 Minuten); Entfernen des Lösungsmittels Methanol im Vakuum und weiter Ersetzen durch THF (2 x 10 ml) und Lösen des restlichen Carbonats in THF (90 ml);
Ausführen des Kupplungsschrittes durch Eintragen von 2-(2'-Triphenylmethyl-2'H-tetrazol-5'-yl)phenylboronsäure (24,0 g) und 2-n-Butyl-4-chlor-5-hydroxymethyl-1-p-brombenzyl-1H-imidazol (14,2 g) in die vorstehende Carbonatlösung; Entgasen des Gemisches durch Vakuum/Stlckstoffspülungen (5x), gefolgt vom Zufügen der vorstehend hergestellten Katalysatorlösung; Erhitzen des Reaktionsgemisches unter Rückfluß, Altern bis zum Abschluß (8 bis 10 Stunden), Abkühlen auf Raumtemperatur und Filtrieren durch eine Lage Celite und dessen weiteres Waschen mit THF (3 x 10 ml) (89 Gew.-% Ausbeute);
oder
C) Herstellen des Katalysators durch Lösen von Triphenylphosphin (262 mg, 1,0 mMol) in THF (20 ml) und Entgasen der Lösung durch Vakuum/Stickstoffspülungen (3x), Zufügen von Palladiumacetat (56 mg, 0,25 mMol) und erneutes Entgasen (3x) der Lösung; 30 min Erwärmen der sich daraus ergebenden Lösung auf 60°C und anschließend Kühlen auf 25°C;
Ausführen des Kupplungsschrittes durch Suspendieren von 2-(2'-Triphenylmethyl-2'H-tetrazol-5'-yl)phenylboronsäure (15,4 g, 26,7 mMol, 75 Gew.-% rein) in Diethoxymethan (DEM) (80 ml, KF ≤ 500 mg/ml); Zufügen von Wasser (0,55 ml, 31 mMol) und 30 min Altern der Anschlämmung bei Raumtemperatur; nach dem Altern Zufügen einer weiteren Menge Wasser (0,55 ml, 31 mMol) zu der Boronsäuresuspension unter Rühren; Behandeln der Anschlämmung anschließend mit gepulvertem Kaliumcarbonat (8,6 g, 62 mMol) und alkyliertem 1-Brom-4-(2'-n-butyl-4'-chlor-5'hydroxymethylimidazol-1'H-1'-yl)methylbenzol (8,97 g, 25 mMol); 30 min Altern des Gemisches bei 20-25°C, anschließend Entgasen (3x); Eintragen der Katalysatorlösung und Erhitzen des Gemisches unter Rückfluß (76-79°C) zum Abschluß der Reaktion in 2-6 Stunden; Zufügen von Wasser (30 ml) und THF (25 ml), wenn das Imidazol verbraucht worden ist und Rühren des Gemisches bei 55-60°C; Abtrennen der Wasserschicht und Waschen der organischen Schicht mit Wasser (30 ml); Einengen der organischen Schicht im Vakuum auf ein Volumen von 50 ml unter Entfernen des meisten THF; Zufügen von mehr DEM (50 ml) und Entfernen durch Destillation unter weiterem Verringern des THF auf ≤ 5 Vol.-%; Verdünnen der restlichen organischen Lösung mit warmem (60°C) DEM (auf ein Endvolumen von 75 ml) und Wasser (0,5 ml, 28 mMol); anschließend langsames Abkühlen des Gemisches über 2 Stunden auf -12°C; 1 Stunde Altern bei -12°C und danach Sammeln des Produkts durch Filtration; Waschen des Kuchens mit kaltem DEM (25 ml); Vakuumtrocknen bei 40°C unter Erhalten von 15,5 g Produkt (93%) (unsolvatisiert) [PD = 600 bis 1000 ppm];
oder
D) Herstellen des Katalysators durch Lösen von Triphenylphosphin (262 mg, 1,0 mMol) in THF (20 ml) und Entgasen der Lösung durch Vakuum/Stickstoffspülungen (3x); Zufügen von Palladiumacetat (56 mg, 0,25 mMol) und erneut Entgasen der Lösung (3x); 30 min Erwärmen der sich daraus ergebenden Lösung auf 60°C und anschließend Kühlen auf 25°C;
Ausführen des Kupplungsschrittes durch Suspendieren von 2-(2'-Triphenylmethyl-2'H-tetrazol-5'-yl)phenylboronsäure (15,4 g, 26,7 mMol, 75 Gew.-% rein) in Diethoxymethan (DEM) (80 ml, KF ≤ 500 mg/ml); Zufügen von Wasser (0,55 ml, 31 mMol) und 30 min Altern der Anschlämmung bei Raumtemperatur; Zufügen einer weiteren Menge Wasser (0,55 ml, 31 mMol) zu der Boronsäuresuspension unter Rühren; Behandeln der Anschlämmung mit gepulvertem Kaliumcarbonat (8,6 g, 62 mMol) und 1-Brom-(2'-n-butyl-4'-chlor-5'-hydroxymethylimidazol-l'H-1'-yl)methylbenzol, dem alkylierten Imidazol (8,97 g, 25 mMol); 30 min Altern des Gemisches bei 20-25°C und anschließend gut Entgasen (3x); Eintragen der Katalysatorlösung und Erhitzen des Gemisches unter Rückfluß (76-79°C) bis zum Abschluß der Reaktion nach 2-6 Stunden; Zufügen von Wasser (30 ml) und THF (25 ml), wenn das Imidazol verbraucht worden ist und Rühren des Gemisches bei 55-60°C; Abtrennen der Wasserschicht und Waschen der organischen Schicht mit Wasser (30 ml); Zufügen von Tributylphosphin (0,62 ml, 10 Mol%) und
Einengen der organischen Schicht im Vakuum auf ein Volumen von 50 ml unter Entfernen des meisten THF; Zufügen von mehr DEM (50 ml) und Entfernen durch Destillation unter weiterem Verringern des THF auf ≤ 5 Vol.-%; Verdünnen der restlichen organischen Lösung mit warmem (60°C) DEM (auf ein Endvolumen von 75 ml) und Wasser (0,5 ml, 28 mMol); langsames Abkühlen des Gemisches über 2 Stunden auf -12°C; nach 1 Stunde Altern bei -12°C; Sammeln des Produkts durch Filtration; Waschen des Kuchens mit kaltem DEM (25 ml); Vakuumtrocknen bei 40°C unter Erhalten von 15,5 g Produkt (93%) (unsolvatisiert) [PD ≤ 10 ppm].

## Revendications

1. Procédé pour la préparation de 2-n-butyl-4-chloro-1-[(2'-(2-triphénylméthyl-2H-tétrazol-5-yl)-1,1'-biphényl-4-yl)méthyl]-1H-imidazole-5-méthanol, qui comprend la réaction:
de l'acide 2-(2'-triphénylméthyl-2'-H-tétrazol-5'-yl)phénylboronique avec le 1-bromo-4-(2'-butyl-4'-chloro-5'-hydroxyméthylimidazole-1'H-1'-yl)méthylbenzène par:
A) une préparation de la solution de catalyseur par un ajout, à un mélange de chlorure de palladium (10,6 mg) et de triphénylphosphine (31,5 mg), de toluène anhydre (4 ml); un dégazage de la solution hétérogène par des purges de vide/azote (3 x) et ensuite un chauffage à 60°C pendant 30 minutes; un ajout de triisopropylphosphite (30,0 microlitres) et un chauffage supplémentaire du mélange à 60°C jusqu'à ce qu'une solution homogène soit obtenue (de 1 à 2 heures);
une réalisation du couplage par une mise en suspension de l'acide 2-(2'-triphénylméthyl-2'H-tétrazol-5'-yl)phénylboronique (1,3 g) dans du toluène (4 ml) et un ajout d'eau (100 microlitres); une agitation du mélange hétérogène à la température ambiante pendant 30 minutes et ensuite un chargement de carbonate de potassium (0,7 g) suivi par un chargement de 2-n-butyl-4-chloro-5-hydroxyméthyl-1-p-bromobenzyl-1H-imidazole; un dégazage du mélange par des purges de vide/azote (3 x) et un ajout de la solution de catalyseur ci-dessus; une élévation de la température du mélange entre 80 et 85°C et le maintien de cette température pendant 2 heures; un refroidissement du mélange à 40°C et un ajout d'eau (5 ml); un retrait de la phase aqueuse et une concentration de la phase organique sous vide à ≤ 30°C jusqu'à un volume de ∼3 ml; un ajout de méthyl-i-butylcétone (MIBK) (8 ml) et une réduction du mélange à nouveau jusqu'à ∼3 ml; une dilution du mélange avec MIBK (4 ml) et de l'eau (36 microlitres), un chauffage à 60°C et un refroidissement et un vieillissement tout d'abord à 0°C pendant 30 minutes, suivi par un vieillissement à -10°C sous agitation pendant 2 heures; une récupération du produit cristallisé par filtration sous forme d'un solvate de mono-MIBK (1,44 g, 94% de rendement); une dissolution du produit brut dans MIBK (2,1 ml) à 80°C; une filtration de la solution chaude à 80°C et un ajout d'eau (33,8 microlitres); un refroidissement lent de la solution à 0°C sur une période de 1 heure et un vieillissement à 0°C pendant 30 minutes suivi par un vieillissement à -10°C sous agitation pendant 2 heures; et une récupération après filtration de 1,38 g du produit solvaté de mono-MIBK (90% de rendement);
ou
B) une préparation de la solution de catalyseur par:
a) un ajout, à un mélange de chlorure de palladium (354 mg) et de triphénylphosphine (2,1 g), de tétrahydrofuranne (THF) anhydre (75 ml); un dégazage de la solution hétérogène par des purges de vide/azote (3 x) et ensuite un reflux pendant 4 heures; un refroidissement de la solution de THF hétérogène contenant le chlorure de palladium phosphiné à la température ambiante et un ajout de diéthylzinc (4,0 ml, 1 M dans des hexanes); une agitation de la solution pendant 30 minutes; ou
b) un ajout, à un mélange de chlorure de palladium (354 mg) et de triphénylphosphine (2,1 g), de THF anhydre (75 ml); un dégazage de la solution hétérogène par des purges de vide/azote (3 x) et ensuite un ajout de triisopropylphosphite (0,99 ml); et un maintien du mélange à la température ambiante jusqu'à ce que la totalité du chlorure de palladium soit dissous et qu'une solution homogène soit obtenue (de 0,5 à 1 heure);
une préparation d'une solution de carbonate de benzyltriméthylammonium par un ajout à une solution d'hydroxyde de benzyltriméthylammonium (42 g) de carbonate d'ammonium (5,0 g) et un vieillissement de la réaction sous agitation jusqu'à ce que la totalité du carbonate d'ammonium soit dissoute (∼30 minutes); un retrait du solvant de méthanol sous vide et en outre un remplacement avec THF (2 x 10 ml); et une dissolution du carbonate résiduel dans THF (90 ml);
une réalisation de l'étape de couplage par un chargement à la solution de carbonate ci-dessus d'acide 2-(2'-triphénylméthyl-2'H-tétrazol-5'-yl)phénylboronique (24,0 g) et de 2-n-butyl-4-chloro-5-hydroxyméthyl-1-p-bromobenzyl-1H-imidazole (14,2 g); un dégazage du mélange par des purges de vide/azote (5 x), suivi par un ajout de la solution de catalyseur préparée ci-dessus; un chauffage du mélange réactionnel au reflux, un vieillissement jusqu'à la fin de la réaction (de 8 à 10 heures); un refroidissement à la température ambiante et une filtration à travers un tampon de celite et un lavage supplémentaire avec THF (3 x 10 ml) (rendement 89% en poids);
ou
C) une préparation du catalyseur par une dissolution de triphénylphosphine (262 mg, 1,0 mmol) dans THF (20 ml) et un dégazage de la solution par des purges de vide/azote (3 x); un ajout d'acétate de palladium (56 mg, 0,25 mmol) et un dégazage de la solution à nouveau (3 x); un chauffage de la solution résultante à 60°C pendant 30 min et ensuite un refroidissement à 25°C;
une réalisation de l'étape de couplage par une mise en suspension d'acide 2-(2'-triphénylméthyl-2'H-tétrazol-5'-yl)phénylboronique (15,4 g, 26,7 mmol, 75% en poids pur) dans du diéthoxyméthane (DEM) (80 ml, KF ≤ 500 mg/ml); un ajout d'eau (0,55 ml, 31 mmol) et un vieillissement de la suspension épaisse à la température ambiante pendant 30 min; un ajout après le vieillissement d'une autre charge d'eau (0,55 ml, 31 mmol) à la suspension d'acide boronique sous agitation; un traitement de la suspension épaisse ensuite avec du carbonate de potassium en poudre (8,6 g, 62 mmol) et du 1-bromo-4-(2'-n-butyl-4'-chloro-5'-hydroxyméthylimidazole-1'H'-1'-yl)méthylbenzène alkylé (8,97 g, 25 mmol); un vieillissement du mélange à 20-25°C pendant 30 min, puis un dégazage (3 x); un chargement de la solution de catalyseur et un chauffage du mélange au reflux (76-79°C) pour terminer la réaction en 2-6 heures; un ajout d'eau (30 ml) et de THF (25 ml) lorsque l'imidazole a été consommé et une agitation du mélange à 55-60°C; une séparation de la phase aqueuse et un lavage de la phase organique avec de l'eau (30 ml); une concentration de la phase organique sous vide jusqu'à un volume de 50 ml pour retirer la majeure partie du THF; un ajout de plus de DEM (50 ml) et un retrait par distillation pour réduire davantage THF jusqu'à ≤ 5% en volume; une dilution de la solution organique résiduelle avec du DEM chaud (60°C) (jusqu'à un volume final de 75 ml) et de l'eau (0,5 ml, 28 mmol); puis un refroidissement lent du mélange à -12°C sur une période de 2 heures; un vieillissement à -12°C pendant 1 heure et une récupération par la suite du produit par filtration; un lavage du gâteau avec du DEM froid (25 ml); un séchage sous vide à 40% pour obtenir 15,5 g de produit (93%) (non solvaté) [PD = de 600 à 1000 ppm];
ou
D) une préparation du catalyseur par une dissolution de triphénylphosphine (262 mg, 1,0 mmol) dans THF (20 ml) et un dégazage de la solution par des purges de vide/azote (3 x); un ajout d'acétate de palladium (56 mg, 0,25 mmol) et un dégazage à nouveau de la solution (3 x); un chauffage de la solution résultante à 60°C pendant 30 min et ensuite un refroidissement à 25°C;
une réalisation de l'étape de couplage par une mise en suspension d'acide 2-(2'-triphénylméthyl-2'H-tétrazol-5'-yl)phénylboronique (15,4 g, 26,7 mmol, 75% en poids pur) dans du diéthoxyméthane (DEM) (80 ml, KF ≤ 500 mg/ml); un ajout d'eau (0,55 ml, 31 mmol) et un vieillissement de la suspension épaisse à la température ambiante pendant 30 min; un ajout d'une autre charge d'eau (0,55 ml, 31 mmol) à la suspension d'acide boronique sous agitation; un traitement de la suspension épaisse avec du carbonate de potassium en poudre (8,6 g, 62 mmol) et du 1-bromo-4-(2'-n-butyl-4'-chloro-5'-hydroxyméthylimidazole-1'H'-1'-yl)méthylbenzène, l'imidazole alkylé (8,97 g, 25 mmol); un vieillissement du mélange à 20-25°C pendant 30 min et ensuite un dégazage (3 x); un chargement de la solution de catalyseur et un chauffage du mélange au reflux (76-79°C) jusqu'à la fin de la réaction en 2-6 heures; un ajout d'eau (30 ml) et de THF (25 ml) lorsque l'imidazole a été consommé et une agitation du mélange à 55-60°C; une séparation de la phase aqueuse et un lavage de la phase organique avec de l'eau (30 ml); un ajout de tributylphosphine (0,62 ml, 10% en moles) et une concentration de la phase organique sous vide jusqu'à un volume de 50 ml pour retirer la majeure partie du THF; un ajout de plus de DEM (50 ml) et un retrait par distillation pour réduire davantage THF jusqu'à ≤ 5% en volume; une dilution de la solution organique résiduelle avec du DEM chaud (60°C) (jusqu'à un volume final de 75 ml) et de l'eau (0,5 ml, 28 mmol); un refroidissement lent du mélange à -12°C sur une période de 2 heures; après un vieillissement à -12°C pendant 1 heure, une récupération du produit par filtration; un lavage du gâteau avec du DEM froid (25 ml); un séchage sous vide à 40°C pour obtenir 15,5 g de produit (93%) (non solvaté) [PD ≤ 10 ppm].
